# DEMANDE DE BREVET EUROPEEN

(11) **EP 4 386 372 A1**
(43) Date de publication de la demande: **19.06.2024**
(21) Numéro de dépôt: 23215079.7
(22) Date de dépôt: 07.12.2023
(51) Int. Cl.: G01N 29/07, G01N 29/38, G01N 29/40, G01N 29/44, G01N 29/04

(54) **PROCEDE AMELIORE D'ANALYSE D'UNE PIECE PAR TEST NON DESTRUCTIF A L'AIDE D'ULTRASONS**

(30) Priorité: 12.12.2022 FR 2213191
(71) Demandeur: Airbus SAS, 31700 Blagnac (FR); Airbus Operations (S.A.S.), 31060 Toulouse Cedex 9 (FR)
(72) Inventeur: BARUT, Silvere, 31700 BLAGNAC (FR); BENTOUHAMI, Franck, 31060 TOULOUSE (FR); LE PINRU, Louis, 31060 TOULOUSE (FR)
(74) Mandataire: Cabinet Le Guen Maillet

(57) **Abrégé**

L'invention concerne un procédé d'analyse, de la qualité d'une première pièce mécanique, comprenant une détermination d'un gabarit de filtrage de données à partir d'informations représentatives d'une onde ultrasonore réfléchie dans une deuxième pièce mécanique dite « étalon » pendant l'émission d'une onde ultrasonore selon un parcours d'application prédéfini, puis, une extraction d'informations représentatives de la qualité de ladite première pièce à partir d'informations représentatives de ladite onde ultrasonore réfléchie dans la première pièce et dudit gabarit, le gabarit comprenant une pluralité de seuils d'amplitude de l'onde réfléchie exprimés par rapport au temps de trajet de l'onde dans les pièces.

Avantageusement, il est ainsi possible de s'affranchir d'analyser de nombreuses informations afférentes à la réflexion normale de l'onde ultrasonore dans la pièce à analyser, d'en simplifier l'analyse et de réduire sensiblement le temps d'analyse.

## Description

### DOMAINE TECHNIQUE

La présente invention concerne un procédé non destructif d'analyse de la qualité d'une pièce mécanique. L'invention concerne plus particulièrement un procédé de recherche sélective d'au moins un écho d'une onde ultrasonore appliquée à ladite pièce mécanique aux fins de réaliser un test non destructif de l'intégrité de cette pièce.

### ÉTAT DE LA TECHNIQUE ANTÉRIEURE

Des techniques de caractérisation de pièces mécaniques utilisant l'analyse d'une onde ultrasonore propagée sont largement utilisées. Ces techniques sont couramment utilisées dans le domaine de l'aéronautique et dans un but de contrôle de l'intégrité d'une pièce après production ou lors d'opérations de maintenance. Ces techniques utilisent l'émission d'une onde ultrasonore émise par un transducteur placé sur la surface d'une pièce à contrôler ou encore à proximité de la surface de la pièce immergée dans de l'eau. L'onde ultrasonore ainsi émise est réfléchie (phénomène d'écho) lorsqu'elle rencontre une rupture d'impédance acoustique du matériau de la pièce testée, du fait de la forme de la pièce ou encore du fait de la présence d'un défaut d'intégrité de la pièce. Les méthodes d'analyse afférentes à ces tests utilisent souvent des représentations visuelles, de type oscillogramme, permettant de visualiser l'onde ultrasonore et/ou un ou plusieurs échos de cette onde diffusés dans la pièce en cours d'évaluation. L'illustration de l'onde ultrasonore réfléchie représente généralement l'amplitude de l'onde réfléchie en fonction du temps, ce qui permet d'observer des temps de trajet de l'onde dans le matériau de la pièce et de mettre en évidence des échos propres à la réflexion de l'onde sur des surfaces de la pièce ou sur d'éventuels défauts en présence. Des logiciels d'analyse des signaux mesurés représentatifs d'une onde ultrasonore réfléchie permettent d'opérer des filtrages simples par la détermination de fenêtres de filtrage. Une fenêtre de filtrage est définie par un seuil d'amplitude entre deux limites temporelles, de sorte à filtrer des signaux représentatifs d'échos dont la présence est normale ou recherchée. Ce type de filtrage est toutefois relativement sommaire et lorsqu'une pièce à analyser présente une forme complexe, de nombreux échos peuvent coexister, ce qui rend l'analyse parfois longue et complexe.

La situation peut être améliorée.

### EXPOSÉ DE L'INVENTION

Un objet de la présente invention est de proposer un procédé d'analyse permettant de s'affranchir d'avoir à analyser des échos dont la présence est attendue au regard de la forme et des dimensions de la pièce à tester, ce qui permet de limiter sensiblement le temps d'analyse de l'intégrité d'une pièce.

A cet effet, il est proposé un procédé d'analyse, par test non destructif, de la qualité d'une première pièce mécanique, comprenant :
- obtenir des premières informations représentatives d'une onde ultrasonore réfléchie pendant l'émission de ladite onde ultrasonore selon un premier parcours d'application, dans une deuxième pièce mécanique faite d'un matériau identique à celui dans lequel est faite la première pièce mécanique et présentant la même forme que la première pièce mécanique,
le procédé étant caractérisé en ce qu'il comprend en outre :
- déterminer un gabarit de filtrage de données de mesures à partir desdites premières informations,
- émettre ladite onde ultrasonore dans la première pièce mécanique en l'appliquant via un deuxième parcours d'application,
- obtenir, via au moins un capteur, des deuxièmes informations, représentatives de ladite onde ultrasonore réfléchie dans la première pièce mécanique pendant la propagation de l'onde ultrasonore, et,
- extraire des troisièmes informations, représentatives de ladite qualité de ladite première pièce, à partir desdites deuxièmes informations obtenues et dudit gabarit de filtrage.

Il est ainsi possible d'éviter d'avoir à analyser de nombreuses informations afférentes à une réflexion normale de l'onde ultrasonore dans la pièce à analyser.

Le procédé selon l'invention peut également comporter les caractéristiques suivantes, considérées seules ou en combinaison :
- Le gabarit de filtrage est déterminé automatiquement à partir desdites premières informations.
- Lesdites premières informations sont obtenues depuis un outil logiciel de simulation d'émission et de réflexion d'une onde ultrasonore dans une pièce mécanique de forme prédéfinie.
- Lesdites premières informations sont obtenues depuis au moins un capteur d'onde ultrasonore.
- Ledit gabarit est déterminé à partir d'une pluralité d'intervalles de temps respectivement associés à un ou plusieurs niveaux d'amplitude de filtrage de l'onde sonore réfléchie.
- Au moins un intervalle de temps est associé à plusieurs niveaux d'amplitude de filtrage de l'onde sonore réfléchie, lesdits niveaux d'amplitude présentant une continuité entre eux.
- Ledit deuxième parcours est identique audit premier parcours suivi lors de l'émission de ladite onde dans la deuxième pièce mécanique.
- Le procédé d'analyse de la qualité d'une pièce comprend en outre :
   - représenter graphiquement lesdites troisièmes informations.
- Le gabarit de filtrage est ajusté postérieurement à l'obtention de tout ou partie des deuxièmes informations, représentatives de ladite onde ultrasonore réfléchie dans la première pièce mécanique.

Un autre objet de l'invention est un système d'analyse, par test non destructif, de la qualité d'une première pièce mécanique, comprenant :
- une interface d'entrée configurée pour obtenir des premières informations représentatives d'une onde ultrasonore réfléchie pendant l'émission de ladite onde ultrasonore selon un premier parcours d'application, dans une deuxième pièce mécanique faite d'un matériau identique à celui dans lequel est faite la première pièce mécanique et présentant la même forme que la première pièce mécanique,
le procédé étant caractérisé en ce qu'il comprend en outre :
- une première unité de contrôle configurée pour déterminer un gabarit de filtrage de données de mesures à partir desdites premières informations,
- un transducteur configuré pour émettre ladite onde ultrasonore dans la première pièce mécanique en l'appliquant via un deuxième parcours d'application,
- au moins un capteur configuré pour obtenir des deuxièmes informations, représentatives de ladite onde ultrasonore réfléchie dans la première pièce mécanique pendant la propagation de l'onde ultrasonore, et,
- une deuxième unité de contrôle configurée pour extraire des troisièmes informations, représentatives de ladite qualité de ladite première pièce, à partir desdites deuxièmes informations obtenues et dudit gabarit de filtrage.

Selon un mode de réalisation, ladite interface d'entrée est un capteur d'onde ultrasonore.

L'invention a également pour objet un programme d'ordinateur comprenant des instructions de codes de programme pour exécuter les étapes du procédé précédemment décrit lorsque ledit programme est exécuté par un processeur, ainsi qu'un support de stockage d'informations comprenant un tel programme d'ordinateur.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints :
[Fig. 1] illustre schématiquement un système d'analyse de l'intégrité de pièces mécaniques par émission d'une onde ultrasonore ;
[Fig. 2] illustre schématiquement une analyse de type c-scan opérée grâce au système déjà représenté sur la Fig. 1 ;
[Fig. 3] illustre schématiquement la mesure d'une onde ultrasonore dans une pièce mécanique en cours d'analyse, en l'absence de défaut ;
[Fig. 4] illustre schématiquement la mesure d'une onde ultrasonore dans une pièce mécanique en cours d'analyse, en présence d'un défaut d'intégrité de la pièce ;
[Fig. 5] illustre schématiquement un gabarit de filtrage pour la mesure d'une onde ultrasonore dans une pièce mécanique en cours d'analyse ;
[Fig. 6] illustre un procédé d'analyse de la qualité d'une pièce mécanique selon un mode de réalisation, et,
[Fig. 7] représente schématiquement une architecture interne du système d'analyse déjà représenté sur la Fig. 1.

### EXPOSÉ DÉTAILLÉ DE MODES DE RÉALISATION

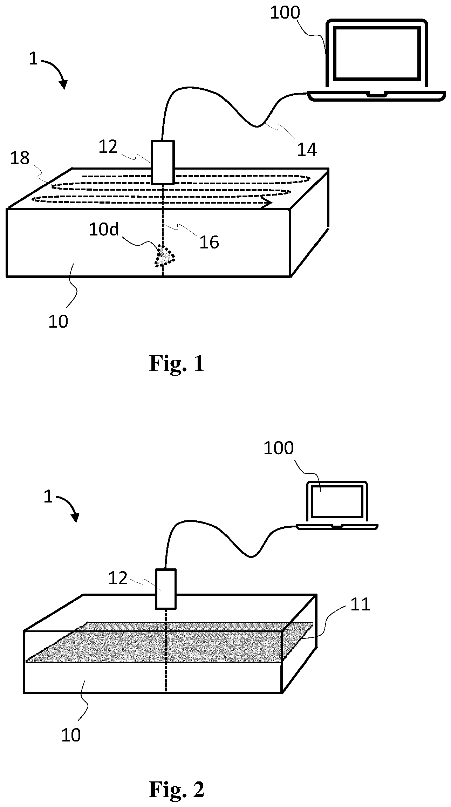

La **Fig. 1** est une représentation schématique d'un système d'analyse 1, par test non destructif, de la qualité d'une pièce mécanique. Le système d'analyse 1 comprend un transducteur 12 relié à une unité de traitement 100 par l'intermédiaire d'un lien de communication 14. Selon l'exemple représenté, le transducteur 12 est positionné au contact d'une pièce mécanique 10, de forme parallélépipédique, en utilisant un produit coupleur permettant de garantir une bonne propagation d'une onde ultrasonore générée par le transducteur 12. Plus précisément, le transducteur 12 est positionné et couplé au contact de la face supérieure de la pièce mécanique 10. Le transducteur 12 comprend un émetteur d'onde ultrasonore 12e (non représenté sur la Fig. 1) configuré pour émettre une onde ultrasonore 16 de référence à la surface de la pièce mécanique 10. Le transducteur 12 comprend en outre un capteur d'onde ultrasonore 12r (non représenté sur la Fig. 1) configuré pour détecter une onde ultrasonore en présence, telle que par exemple, une partie de l'onde ultrasonore 16 réfléchie dans la pièce mécanique 10. L'émetteur d'onde ultrasonore 12e est configuré pour convertir un signal électrique de commande, reçu via le lien de communication 14, sous contrôle de l'unité de traitement 100, en l'onde ultrasonore 16. Le capteur d'onde ultrasonore 12r est configuré pour convertir une onde ultrasonore en présence en un signal électrique représentatif de cette onde ultrasonore et pour transmettre ce signal électrique à l'unité de traitement 100, sous la forme d'informations. Le système d'analyse 1 permet de détecter un défaut d'intégrité dans une pièce mécanique telle que la pièce mécanique 10 en analysant les signaux reçus par le capteur d'onde ultrasonore 12r du transducteur 12, lorsque l'onde ultrasonore 16 est émise dans la pièce. L'onde ultrasonore émise et réfléchie dans la pièce testée comprend des informations représentatives des dimensions de la pièce et de la forme de celle-ci, ainsi que des informations sur le matériau et la qualité du couplage du transducteur 12 avec la pièce testée. Par exemple, le matériau dans lequel est réalisée la pièce testée et/ou la qualité du couplage entre le transducteur et la pièce testée ont une incidence importante sur l'amplitude de l'onde réfléchie. De plus, la forme et les dimensions de la pièce testée ont une incidence importante sur le positionnement de l'onde réfléchie par rapport à l'onde incidente appliquée à la pièce ainsi que sur l'amplitude de l'onde réfléchie. Par exemple, si le fond de la pièce est plan et perpendiculaire à la direction de propagation de l'onde incidente appliquée à la pièce, l'onde réfléchie présentera une amplitude supérieure à celle observée si le fond de la pièce est oblique et que l'onde incidente se décompose alors selon plusieurs directions pour former une onde réfléchie dont la composante vue par le transducteur 12 sera alors moindre. Selon l'exemple décrit, la pièce mécanique 10 présente un défaut d'intégrité 10d interne au volume de la pièce mécanique 10, dans la matière. Le défaut d'intégrité 10d est, par exemple, une zone présentant une porosité de sorte que la densité de matière soit moindre dans cette zone que dans les autres parties de la pièce mécanique 10. Lorsque l'onde ultrasonore 16 émise depuis le transducteur 12, sous contrôle de l'unité de traitement 100, rencontre le défaut d'intégrité 10d, une partie de l'onde ultrasonore 16 est réfléchie par le défaut d'intégrité 10d, du fait de la rupture (ou variation) d'impédance acoustique induite par la porosité. Le capteur d'onde ultrasonore 12r peut alors capter l'onde réfléchie sur le défaut 10d de la pièce mécanique 10 en plus d'une partie de l'onde ultrasonore 16 réfléchie sur le fond de la pièce mécanique 10d. Dans la suite de la description, une analyse de l'intégrité d'une pièce mécanique à partir d'un point prédéfini de la surface supérieure de la pièce mécanique est nommée une analyse de type A-scan et une analyse de l'intégrité d'une pièce à partir d'une pluralité de points rapprochés les uns des autres de la surface supérieure d'une pièce mécanique est nommée une analyse de type C-scan. Par exemple, des analyses successives de type A-scan opérées en suivant le parcours (ou trajectoire) 18 sur la surface supérieure de la pièce mécanique 10 constituent une analyse de type C-scan. Bien évidemment, une analyse de type C-scan requiert que les points successifs d'application de l'onde ultrasonore qui constituent ensemble le parcours d'application 18 de l'onde ultrasonore soient suffisamment rapprochés pour ne pas risquer de passer à côté d'une zone présentant un défaut d'intégrité.

L'unité de traitement 100 comprend des moyens matériels (dont notamment des circuits électroniques et des circuits de traitement du signal) et des moyens logiciels permettant de contrôler le transducteur 12 mais aussi d'opérer une analyse des signaux en provenance du capteur d'onde ultrasonore 12r qui sont représentatifs de l'onde ultrasonore 16 émise et réfléchie par une pièce mécanique analysée.

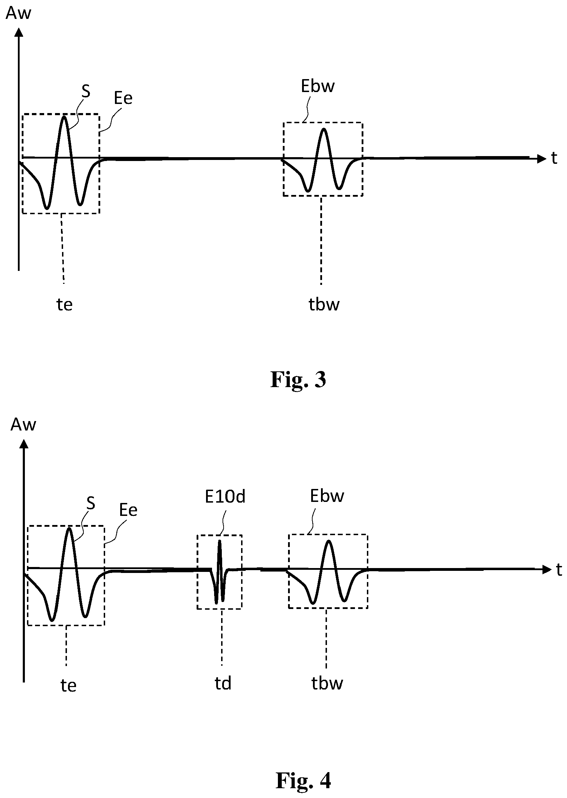

Aux fins de simplifier la visualisation de résultats d'analyse de l'intégrité d'une pièce mécanique, il est souvent avantageux d'opérer un filtrage des signaux reçus par un capteur d'onde ultrasonore, de sorte à s'affranchir d'avoir à visualiser simultanément de trop nombreux signaux. En effet, la visualisation, grâce à l'unité de traitement 100 de trop nombreuses informations représentatives des signaux captés, et donc de parties de l'onde ultrasonore 16 réfléchie, est de nature à entraîner de possibles erreurs d'interprétation, ce qui engendre un risque de ne pas détecter un défaut d'intégrité présent dans une pièce mécanique en cours d'analyse. Il est courant d'utiliser un filtrage par fenêtrage temporel et par seuil d'amplitude (parfois appelé « porte »). Un tel filtrage consiste à définir une fenêtre de visualisation associée à un capteur d'onde ultrasonore ou un ensemble de fenêtres de visualisation associées à une pluralité de capteurs d'ondes ultrasonores. Le filtrage peut être seulement temporel, seulement en amplitude ou encore les deux combinés. L'utilisation d'un filtrage permet d'analyser uniquement certaines zones d'une pièce mécanique ou plus exactement des informations représentatives de certaines zones d'une pièce mécanique. Par exemple, la **Fig. 2** illustre, en partie grisée, une zone (un plan) interne 11 de la pièce mécanique 10 qui peut être observée en filtrant temporellement les signaux représentatifs de l'onde ultrasonore 16 appliquée successivement en tous points de la surface supérieure de la pièce mécanique 10. Pour ce faire, il convient de n'observer que les éventuels signaux représentatifs de l'onde ultrasonore 16 réfléchie en tenant compte du temps de trajet de l'onde qui se réfléchirait en cas de présence d'une rupture d'impédance acoustique dans la zone 11. Le temps de trajet d'une onde ultrasonore dans un milieu est communément nommé ToF, de l'anglais « Time of Flight » (qui signifie « temps de vol »). Ainsi, si une représentation d'une onde ultrasonore émise et réfléchie, puis captée par un capteur d'onde ultrasonore, est représentée sous la forme d'une amplitude en fonction du temps, et qu'une référence temporelle est établie à partir de l'onde ultrasonore émise, un filtrage temporel revient à ne regarder que la zone de représentation définie temporellement en fonction du temps de vol ToF que mettrait une onde réfléchie sur une rupture d'impédance pour arriver jusqu' à un capteur dont la position est prédéterminée. La **Fig. 3** illustre la notion de temps de vol ToF ainsi que d'amplitude Aw d'une onde ultrasonore réfléchie dans une pièce mécanique, en fonction du temps. La Fig. 3 illustre à titre d'exemple l'amplitude Aw en fonction du temps t de l'onde ultrasonore 16 réfléchie dans la pièce mécanique 10 lorsque le transducteur 12 est positionné à un endroit de la surface supérieure de la pièce mécanique 10 à partir duquel l'onde ultrasonore 16 émise ne rencontre pas le défaut d'intégrité 10d lors de son parcours dans la pièce mécanique 10. La référence temporelle t = 0 est prédéterminée et correspond au début de l'émission de l'onde ultrasonore 16 par l'émetteur 12e, captée par le capteur d'onde ultrasonore 12r. L'onde ultrasonore 16 est émise sous la forme d'une impulsion S dont le maximum d'énergie apparait à un temps te d'émission. Sur la Fig. 3, l'onde ultrasonore 16 émise est repérée dans un encart référencé Ee. En l'absence de défaut d'intégrité sur le parcours de l'onde ultrasonore 16, l'onde se réfléchit sur la face opposée de la pièce, formant une extrémité de matière (et donc une rupture d'impédance acoustique) et l'onde ainsi réfléchie apparait plus tard, au bout d'un temps tbw sur la représentation. La réflexion de l'impulsion S émise est repérée sur la Fig. 3 par un encart référencé Ebw. Une telle analyse est réalisée en émettant l'onde ultrasonore 16 depuis un point unique de la surface supérieure de la pièce mécanique 10. Il s'agit donc d'une analyse de type A-scan ne présentant pas de défaut mais faisant apparaitre des informations (notamment de temps de vol et d'amplitude) en relation avec l'onde ultrasonore 16 réfléchie sur la surface opposée de la pièce mécanique 10 en cours d'analyse, encore appelée ici le fond de la pièce mécanique 10. L'intervalle de temps tbw-te est le temps de vol de l'impulsion S dans l'épaisseur de la pièce mécanique 10. La **Fig. 4** illustre une analyse de type A-scan similaire à celle déjà illustrée sur la Fig. 3 à ceci près que le transducteur 12 est cette fois positionné en un point de la surface supérieure de la pièce mécanique 10 de sorte que l'onde ultrasonore 16 émise rencontre le défaut d'intégrité 10d lors de son parcours dans la pièce mécanique 10. Il apparait qu'en plus de l'impulsion S émise (repérée dans l'encart Ee) et de sa réflexion sur le fond de la pièce (repérée dans l'encart Ebw), l'impulsion S est réfléchie par le défaut d'intégrité 10d. Sa réflexion apparait au bout d'un temps de vol td et est repérée par un encart référencé E10d, sur la Fig. 4. Le temps td est compris entre le temps te et le temps tbw, ce qui corrobore bien que le défaut se trouve dans une zone située dans l'épaisseur de la pièce, entre la surface supérieure et plus particulièrement le point de la surface supérieure de la pièce mécanique 10 sur lequel est positionné le transducteur 12 pour cette analyse de type A-scan et le fond de la pièce mécanique 10. La valeur du temps de vol td est donc représentative de la localisation de la zone présentant le défaut d'intégrité 10d dans la pièce mécanique 10.

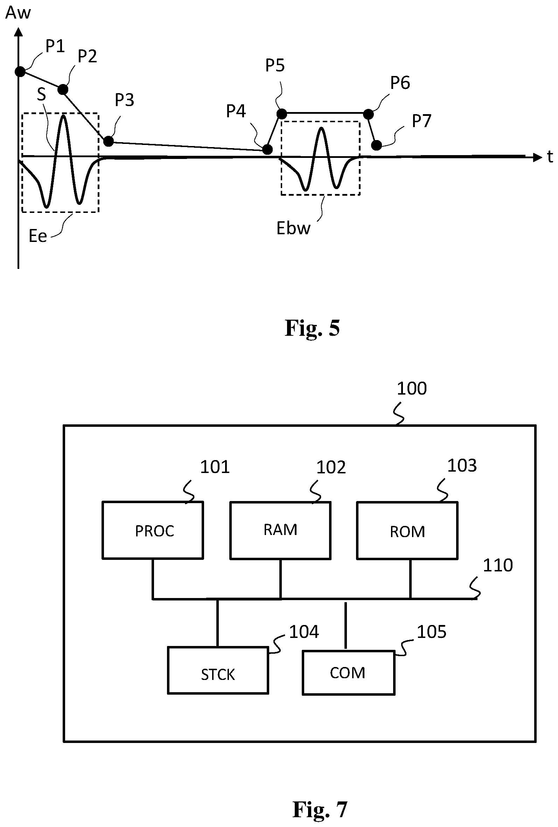

Selon un premier mode de réalisation, lorsque la qualité et l'intégrité d'une pièce mécanique doivent être analysées, un gabarit de filtrage est avantageusement déterminé à partir des informations représentatives de l'onde ultrasonore 16 réfléchie dans une pièce mécanique dépourvue de défaut pendant l'émission d'une onde ultrasonore dans cette pièce « étalon ». Par exemple, une analyse de type A-scan est réalisée avec une pièce étalon présentant des formes et des dimensions identiques à la pièce mécanique 10 à analyser, faite dans le même matériau que la pièce mécanique 10 à analyser, laquelle analyse permet d'obtenir des premières informations, notamment de temps de vol et d'amplitude, de la réflexion de l'onde ultrasonore 16 dans la pièce mécanique 10. Ces premières informations sont, par exemple le temps de vol de l'onde ultrasonore 16 qui parcourt l'épaisseur de la pièce étalon (trajet aller) puis qui se réfléchit sur le fond de la pièce pour revenir ensuite (trajet retour) jusqu'au capteur d'onde ultrasonore 12r du transducteur 12. Les premières informations ainsi obtenues sont donc représentatives d'éléments dont la présence est tout à fait normale (le fond de la pièce, par exemple) et dont la représentation est donc inutile en cours d'analyse. Astucieusement et selon l'invention, il est donc possible de définir, soit manuellement, par l'action d'un utilisateur du système, soit automatiquement, sous contrôle de l'unité de traitement 100, un gabarit de filtrage temporel et en amplitude, visant à éliminer les informations dont la représentation est inutile et de nature à induire potentiellement en erreur un observateur utilisateur du système d'analyse 1 de la qualité d'une pièce mécanique 10. Avantageusement, le gabarit de filtrage est enregistré dans l'unité de traitement 100, de sorte que, lorsqu'une analyse de type A-scan est ensuite réalisée dans les mêmes conditions, non plus sur une pièce mécanique étalon mais sur une pièce mécanique à tester, le gabarit de filtrage peut servir à délimiter des informations utiles et des informations inutiles car normalement attendues, en considérant éventuellement une marge d'erreur. Selon un premier exemple de réalisation, un utilisateur du système d'analyse 1 peut définir un gabarit de filtrage en réalisant un détourage des premières informations obtenues, représentatives de la réflexion de l'onde ultrasonore transmise dans une pièce étalon. Le détourage peut être réalisé en définissant une pluralité de points de coordonnées (amplitude, temps de vol) de sorte à définir une zone d'exclusion, grâce à une interface utilisateur d'un logiciel d'analyse. Ainsi, et lors d'une capture d'onde ultrasonore réfléchie dans une pièce mécanique à analyser, toute information qui sera, par exemple, de nature à apparaitre en deçà de la limite de la zone d'exclusion définie par le gabarit de filtrage sera automatiquement retirée des informations de visualisation représentatives de la qualité de la pièce mécanique en cours d'analyse. La **Fig.** 5 illustre un gabarit de filtrage défini par un utilisateur à partir d'informations représentatives de la réflexion de l'onde ultrasonore 16 émise à la surface d'une pièce mécanique étalon, de dimensions et de forme identiques à la pièce mécanique 10, et faite dans le même matériau que la pièce mécanique 10. Les premières informations obtenues, représentatives de la réflexion de l'onde ultrasonore 16 sont « normalement attendues » puisqu'il s'agit d'informations représentatives de l'onde ultrasonore 16 émise à proximité du point d'émission (en entrée de la pièce mécanique étalon) ainsi que de la réflexion de l'onde ultrasonore 16 sur le fond de la pièce, comme expliqué précédemment.

Avantageusement et selon l'exemple décrit, le gabarit de filtrage est déterminé par un utilisateur qui définit successivement des points P1, P2, P3, P4, P5, P6 et P7 qui détourent ensemble les informations représentatives de l'onde ultrasonore réfléchie dans la pièce étalon. Par exemple, l'utilisateur peut utiliser pour ce faire une interface utilisateur dédiée d'un outil logiciel de simulation d'émission et de réflexion d'une onde ultrasonore dans une pièce mécanique de forme prédéfinie. Chacun des points P1, P2, ..., P7 est par exemple défini par son positionnement sur l'échelle du temps (ici en abscisses) et sur l'échelle de l'amplitude du signal représentatif de l'onde ultrasonore réfléchie (ici en ordonnées). La définition d'un point est réalisée par exemple via une interface de visualisation de l'unité de traitement 100 en utilisant une commande de définition de gabarit de filtrage et en cliquant successivement à différents endroits de l'écran de visualisation, à l'aide d'une souris ou d'un stylet. Selon l'exemple décrit sur la Fig. 5, le gabarit de filtrage déterminé par les points P1 à P7 est assez approximatif, dans la mesure où il n'est pas très rapproché de la courbe de représentation de l'onde ultrasonore réfléchie dans la pièce mécanique, pour simplifier l'illustration. Bien évidemment, le gabarit de filtrage peut comprendre un plus grand nombre de points pour définir la forme de la zone d'exclusion des informations, voire un très grand nombre de points pour définir une zone d'exclusion d'informations.

Chaque couple de points voisins entre eux du gabarit de filtrage définit un intervalle de temps et un niveau de filtrage en amplitude unique si les deux points voisins présentent un même seuil d'amplitude (par exemple P5 et P6 sur la Fig. 5) ou encore un intervalle de temps et une pluralité de niveaux de filtrage successifs si les deux points voisins présentent des seuils d'amplitude différents (par exemple P2 et P3 sur la Fig. 3).

Astucieusement et avantageusement, le positionnement des points peut être réalisé non pas manuellement mais automatiquement par l'unité de traitement 100.

Ainsi, et selon un deuxième mode de réalisation, l'unité de traitement 100 opère une analyse des valeurs maximales des premières informations représentatives de l'onde ultrasonore réfléchie et détermine des points successifs définissant un contour et donc un gabarit de filtrage en intégrant là encore, éventuellement, une marge d'erreur. Ces opérations peuvent être réalisées par l'unité de traitement 100 sous contrôle d'un outil logiciel de simulation d'émission et de réflexion d'une onde ultrasonore dans une pièce mécanique de forme prédéfinie. Selon une première variante, les points déterminés automatiquement et définissant le gabarit de filtrage ont pour coordonnées respectives les valeurs d'amplitude de l'onde ultrasonore réfléchie en fonction du temps de vol de l'onde ultrasonore. Selon une deuxième variante, les points déterminés automatiquement ont pour coordonnées respectives les valeurs d'amplitudes auxquelles est ajoutée une marge (offset) en fonction du temps de vol. Ces exemples ne sont pas limitatifs et d'autres méthodes de détermination d'un gabarit de filtrage, prenant en compte des valeurs maximales de l'onde ultrasonore appliquée et réfléchie dans une pièce étalon peuvent être définies.

Selon un mode de réalisation, un niveau de seuil de filtrage en amplitude, ou autrement dit la coordonnée en ordonnées d'un point du gabarit de filtrage dépend de l'amplitude d'un signal reçu par un capteur d'onde ultrasonore éloigné de la source de l'onde ultrasonore, (la source étant ici le transducteur 12), et servant à caractériser l'amplitude de l'onde ultrasonore réfléchie telle que vue en un point particulier de la surface d'une pièce mécanique en cours d'analyse, différent du point d'application de l'onde. Avantageusement, des données issues de plusieurs capteurs d'ondes ultrasonores respectivement disposés en plusieurs endroits de la surface de la pièce peuvent être prises en compte pour définir un gabarit de filtrage encore plus précis.

Avantageusement, plusieurs pièces étalons similaires peuvent être successivement utilisées pour définir un gabarit final à partir de gabarits intermédiaires successivement déterminés.

Lorsque le gabarit de filtrage est déterminé et enregistré, la même onde ultrasonore que celle utilisée et émise dans la pièce étalon pour déterminer le gabarit de filtrage est cette fois émise dans une pièce à analyser de forme et de dimensions identiques à celles de la pièce étalon, faite d'un même matériau, aux fins d'obtenir des deuxièmes informations représentatives de l'onde ultrasonore réfléchie dans cette pièce à analyser. Il suffit alors d'extraire les informations qui correspondent à une onde réfléchie dont l'amplitude apparait en deçà du gabarit de filtrage pour s'affranchir des informations représentatives de l'onde sonore réfléchie qui sont « normalement attendues » et qui sont inhérentes aux formes de la pièce lorsque celle-ci est dépourvue de défaut.

Selon un mode de réalisation, le gabarit de filtrage est ajusté postérieurement à l'obtention de tout ou partie des deuxièmes informations, représentatives de l'onde ultrasonore réfléchie dans la pièce mécanique, en cours de test d'intégrité. En effet, outre celles liées à la présence d'un ou plusieurs défauts dans la pièce, des disparités peuvent apparaitre entre l'onde réfléchie mesurée et observée en cours de test, et l'onde réfléchie mesurée et observée pendant la phase de définition du gabarit de filtrage à l'aide d'une pièce étalon ou d'un logiciel de simulation. De telles disparités peuvent survenir notamment du fait d'un mauvais couplage entre le transducteur 12 et la pièce mécanique à tester, ou encore du fait d'une variabilité possible des dimensions de la pièce mécanique à tester. Ainsi, par exemple, si le couplage entre le transducteur 12 et la pièce mécanique à tester est de nature à atténuer l'onde incidente émise, et la mesure de l'onde réfléchie, lors de la phase de test, le gabarit de filtrage précédemment défini lors de l'obtention d'informations représentatives de l'onde réfléchie avec une pièce étalon ou à partir d'un logiciel de simulation peut être ajusté automatiquement, ou manuellement par un utilisateur utilisant une interface adaptée à un tel ajustement.

Selon un troisième mode de réalisation, une onde ultrasonore est émise successivement en une pluralité de points de la surface supérieure d'une pièce à analyser, de sorte à décrire un parcours d'application de l'onde ultrasonore en tout point de la pièce mécanique, soit en d'autres termes en effectuant une analyse de type C-scan. Avantageusement, un gabarit de filtrage est alors déterminé pour chacun des points successifs d'application de l'onde ultrasonore, ou autrement dit pour chacun des points du parcours d'application de l'onde ultrasonore (par exemple le parcours d'application 18 illustré sur la Fig. 1). Il est ainsi possible de créer une zone ou une limite d'exclusion d'informations (gabarit de filtrage) à trois dimensions et qui permet d'extraire toute information normalement attendue lors de l'analyse par onde ultrasonore d'une pièce mécanique, du fait de sa forme.

Avantageusement, cela permet, lorsqu'une pièce présente une forme complexe, par exemple avec une grande variabilité d'épaisseur, ou des nervures, des cavités, des reliefs, de renforts, par exemple, de déterminer quelles sont toutes les informations issues de signaux captés représentatifs de l'onde ultrasonore réfléchie dans la pièce et qui sont normalement en présence du fait de la forme de la pièce. Ainsi il est possible de s'affranchir avantageusement d'avoir à observer et analyser un très grand nombre d'informations qui ne sont pas représentatives de défaut d'intégrité d'une pièce mécanique en cours d'analyse. La vitesse d'analyse en est avantageusement grandement accrue.

Selon un mode de réalisation, les premières informations représentatives de l'onde ultrasonore réfléchie dans une pièce étalon ne sont pas captées par un capteur d'onde ultrasonore pendant une phase d'émission de cette onde, mais générées par un outil de simulation dédié configuré pour simuler la propagation et la réflexion d'une onde ultrasonore prédéfinie à partir de n'importe quel point d'une pièce mécanique définie selon un modèle de CAO, en trois dimensions, y compris de forme complexe, et caractérisée en termes de dimensions et de matériaux de fabrication. Ces premières informations sont alors utilisées dans le système d'analyse 1 après avoir été insérées dans le système au moyen d'une interface d'entrée dédiée à cet usage.

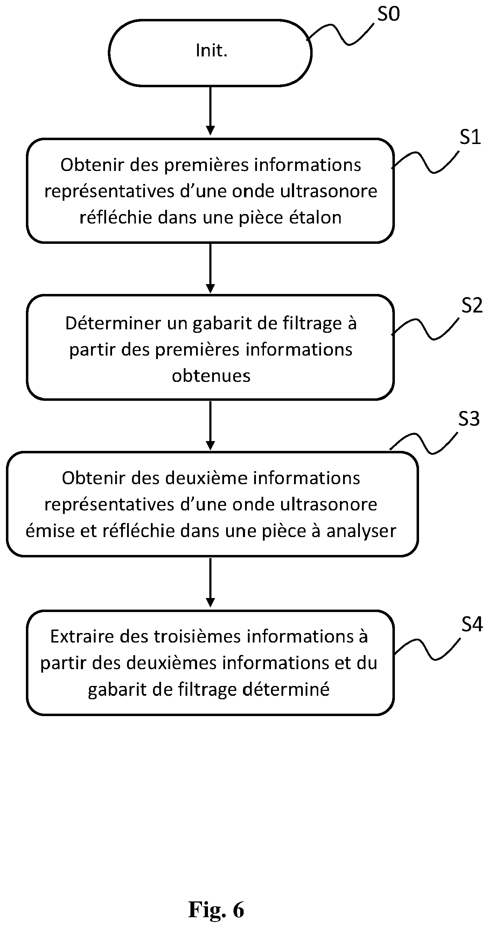

La **Fig. 6** illustre schématiquement un procédé d'analyse de la qualité d'une pièce mécanique. Une étape **SO** est une étape d'initialisation au terme de laquelle le système d'analyse 1 est opérationnel et disponible pour la réalisation d'une analyse. L'unité de traitement 100 est initialisée et exécute un logiciel d'analyse configuré pour contrôler le transducteur 12. L'unité de traitement 100 est apte à générer une onde ultrasonore 16 depuis le transducteur 12 et à capter une onde ultrasonore réfléchie depuis ce même transducteur 12. Lors d'une étape **S1,** une pièce mécanique étalon, considérée comme une référence, dépourvue de défaut d'intégrité, est utilisée aux fins d'analyser l'ensemble des réflexions d'onde ultrasonore réfléchie résultant de la forme de la pièce mécanique. L'onde ultrasonore de référence 16 est successivement émise par le transducteur 12 en tout point du parcours d'application 18 et des premières informations, représentatives de la réflexion de cette onde sont captées par le transducteur 12, puis enregistrées dans une mémoire de travail de l'unité de traitement 100, pour chacun des points du parcours d'application 18. Par exemple, dans le cas d'une pièce mécanique parallélépipédique dépourvue de défauts, l'écho de l'onde ultrasonore de référence 16 est l'écho de l'onde sur le fond de la pièce. Lors d'une étape **S2,** l'unité de traitement 100 détermine automatiquement un gabarit de filtrage prenant en compte les premières informations obtenues pour chacun des points du parcours d'application. Par exemple, pour chaque point du parcours d'application, une fenêtre temporelle d'analyse est limitée à l'intervalle de temps précédant le retour de l'écho de fond, de sorte à s'affranchir de ce type d'informations normalement attendues et ne correspondant aucunement à un défaut d'intégrité d'une pièce. Lors d'une étape **S3,** la pièce mécanique étalon est remplacée par la pièce mécanique 10 à analyser et qui présente au moins un défaut 10d. L'onde ultrasonore 16 de référence est alors appliquée à chacun des points de la pièce mécanique 10 suivant un deuxième parcours d'application préférentiellement identique au premier parcours d'application 18 utilisé pour la pièce étalon. Il est toutefois possible d'utiliser un deuxième parcours d'application de l'onde ultrasonore si la position du transducteur 12 peut être connue et définie automatiquement, par exemple si le transducteur 12 est piloté en position par des moyens automatisés ou robotisés. Lors de cette application de l'onde ultrasonore, des deuxièmes informations représentatives de la réflexion de l'onde ultrasonore 16 de référence dans la pièce mécanique 10 sont obtenues via le transducteur 12, parmi lesquelles se trouve l'écho du défaut 10d de la pièce mécanique 10. Finalement, lors d'une étape **S4,** le gabarit de filtrage déterminé à l'étape S2 avec la pièce mécanique étalon est utilisé pour séparer les informations représentatives de l'onde réfléchie par des formes normales de la pièce mécanique 10 et les informations représentatives de défauts d'intégrité de la pièce mécanique 10. Ainsi, les informations représentatives des défauts d'intégrité de la pièce mécanique 10 sont extraites de la somme des deuxièmes informations captées et seules les informations représentatives de problèmes potentiels d'intégrité de la pièce mécanique seront affichées et rendues visibles à l'utilisateur, à des fins d'analyse. Ceci est particulièrement avantageux quand une pièce mécanique présente des formes complexes, et notamment des épaisseurs multiples en fonction des zones de la pièce, ou des nervures, des renforts, etc. Bien évidemment, la fonction d'extraction décrite peut être inhibée par un utilisateur de l'unité de traitement 100, par exemple via une commande dédiée d'un logiciel d'analyse, aux fins de pouvoir procéder à une analyse exhaustive de l'onde ultrasonore réfléchie.

La **Fig. 7** représente de façon schématique une architecture de l'unité de traitement 100 configurée pour exécuter un procédé d'analyse de la qualité d'une pièce mécanique tel que par exemple le procédé précédemment décrit notamment en relation avec la Fig. 6.

Considérons à titre illustratif que la Fig. 7 illustre un agencement interne de l'unité de traitement 100. On note que la Fig. 7 pourrait aussi illustrer schématiquement un exemple d'architecture matérielle d'une unité de contrôle interne à l'unité de traitement 100.

Selon l'exemple d'architecture matérielle représenté sur la Fig. 7, l'unité de traitement 100 comprend alors, reliés par un bus de communication 110 : un processeur ou CPU (« Central Processing Unit » en anglais) 101 ; une mémoire vive RAM (« Random Access Memory » en anglais) 102 ; une mémoire morte ROM (« Read Only Memory » en anglais) 103 ; une unité de stockage telle qu'un disque dur (ou un lecteur de support de stockage, tel qu'un lecteur de cartes SD (« Secure Digital » en anglais) 104 ; au moins une interface de communication 105 offrant en outre des interfaces de type ports d'entrées / sorties, notamment de nature à recevoir et émettre des signaux simples ou composés et permettant à l'unité de traitement 100 de communiquer avec les dispositifs et circuits internes au transducteur 12, dont notamment l'émetteur d'onde ultrasonore 12e et le capteur d'onde ultrasonore 12r, via le lien 14, ainsi que divers éventuels émetteurs et capteurs d'onde ultrasonore additionnels. L'interface de communication 105 permet en outre la connexion à un dispositif d'affichage pourvu d'une interface utilisateur (par exemple un clavier, une souris, un stylet, un trackpad, etc.)

Le processeur 101 est capable d'exécuter des instructions chargées dans la RAM 102 à partir de la ROM 103, d'une mémoire externe (non représentée), d'un support de stockage (tel qu'une carte SD), ou attachée à un réseau de communication. Lorsque l'unité de traitement 100 est mise sous tension, le processeur 101 est capable de lire depuis la RAM 102 des instructions et de les exécuter. Ces instructions forment un programme d'ordinateur causant la mise en oeuvre, par le processeur 101, d'une partie d'un procédé décrit en relation avec la Fig. 6 ou un dérivé de celui-ci.

Tout ou partie du procédé implémenté par l'unité de traitement 100, ou ses variantes peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, l'unité de traitement 100 comprend de la circuiterie électronique configurée pour mettre en oeuvre le procédé décrit en relation avec lui-même ainsi qu'avec des dispositifs extérieurs d'émission et de capture d'onde ultrasonore. Bien évidemment, l'unité de traitement 100 comprend en outre tous les éléments usuellement présents dans un système comprenant une unité de contrôle et ses périphériques, tels que, un circuit d'alimentation, un circuit de supervision d'alimentation, un ou plusieurs circuits d'horloge, un circuit de remise à zéro, des ports d'entrées-sorties, des entrées d'interruptions, des drivers de bus, des convertisseurs numérique vers analogique et analogique vers numérique, idéalement rapides, cette liste étant non exhaustive.

## Revendications

1. Procédé d'analyse, par test non destructif, de la qualité d'une première pièce mécanique, comprenant :
- obtenir (S1), des premières informations représentatives d'une onde ultrasonore réfléchie pendant l'émission de ladite onde ultrasonore selon un premier parcours d'application, dans une deuxième pièce mécanique faite d'un matériau identique à celui dans lequel est faite la première pièce mécanique et présentant la même forme que la première pièce mécanique,
le procédé étant **caractérisé en ce qu'**il comprend en outre :
- définir (S2) un gabarit de filtrage de données de mesures à partir desdites premières informations de sorte à définir une zone d'exclusion d'informations en deçà de laquelle lesdites premières informations sont automatiquement retirées d'une représentation graphique,
- émettre ladite onde ultrasonore dans la première pièce mécanique en l'appliquant via un deuxième parcours d'application,
- obtenir (S3), via au moins un capteur, des deuxièmes informations, représentatives de ladite onde ultrasonore réfléchie dans la première pièce mécanique pendant l'émission de l'onde ultrasonore, et,
- extraire (S4) des troisièmes informations, représentatives de ladite qualité de ladite première pièce, à partir desdites deuxièmes informations obtenues et dudit gabarit de filtrage.

2. Procédé d'analyse selon la revendication 1, dans lequel ledit gabarit de filtrage est déterminé automatiquement à partir desdites premières informations.

3. Procédé d'analyse selon l'une des revendications 1 et 2 dans lequel lesdites premières informations sont obtenues depuis un outil logiciel de simulation d'émission et de réflexion d'une onde ultrasonore dans une pièce mécanique de forme prédéfinie.

4. Procédé d'analyse selon l'une des revendications 1 et 2, dans lequel lesdites premières informations sont obtenues depuis au moins un capteur d'onde ultrasonore.

5. Procédé d'analyse selon l'une des revendications 1 à 4, dans lequel ledit gabarit est déterminé à partir d'une pluralité d'intervalles de temps respectivement associés à un ou plusieurs niveaux d'amplitude de filtrage de l'onde sonore réfléchie.

6. Procédé d'analyse selon la revendication 5, dans lequel au moins un intervalle de temps est associé à plusieurs niveaux d'amplitude de filtrage de l'onde sonore réfléchie, lesdits niveaux d'amplitude présentant une continuité entre eux.

7. Procédé d'analyse selon l'une des revendications 1 à 6, dans lequel ledit deuxième parcours est identique audit premier parcours suivi lors de l'émission de ladite onde dans la deuxième pièce mécanique.

8. Procédé d'analyse selon l'une des revendications 1 à 7, comprenant en outre :
- représenter uniquement sur ladite représentation graphique lesdites troisièmes informations.

9. Procédé d'analyse selon l'une des revendications 1 à 8, dans lequel ledit gabarit de filtrage est ajusté postérieurement à ladite obtention de tout ou partie des deuxièmes informations, représentatives de ladite onde ultrasonore réfléchie dans la première pièce mécanique.

10. Système d'analyse, par test non destructif, de la qualité d'une première pièce mécanique, comprenant :
- une interface d'entrée configurée pour obtenir des premières informations représentatives d'une onde ultrasonore réfléchie pendant l'émission de ladite onde ultrasonore selon un premier parcours d'application, dans une deuxième pièce mécanique faite d'un matériau identique à celui dans lequel est faite la première pièce mécanique et présentant la même forme que la première pièce mécanique, le procédé étant **caractérisé en ce qu'**il comprend en outre :
- une première unité de contrôle configurée pour déterminer un gabarit de filtrage de données de mesures à partir desdites premières informations,
- un transducteur (12) configuré pour émettre ladite onde ultrasonore dans la première pièce mécanique en l'appliquant via un deuxième parcours d'application,
- au moins un capteur (12r) configuré pour obtenir des deuxièmes informations, représentatives de ladite onde ultrasonore réfléchie dans la première pièce mécanique pendant l'émission de l'onde ultrasonore, et,
- une deuxième unité de contrôle configurée pour extraire des troisièmes informations, représentatives de ladite qualité de ladite première pièce, à partir desdites deuxièmes informations obtenues et dudit gabarit de filtrage.

11. Système d'analyse selon la revendication 10, dans lequel ladite interface d'entrée est un capteur d'onde ultrasonore.

12. Produit programme d'ordinateur comprenant des instructions de codes de programme pour exécuter les étapes du procédé selon l'une quelconque des revendications 1 à 9, lorsque ledit programme est exécuté par un processeur.

13. Support de stockage d'informations comprenant un produit programme d'ordinateur selon la revendication 12.
